# FASCICULE DE BREVET EUROPEEN

(11) **EP 1 685 998 B1**
(45) Date de publication et mention de la délivrance du brevet: **10.03.2010**
(21) Numéro de dépôt: 05112674.6
(22) Date de dépôt: 21.12.2005
(51) Int. Cl.: B60J 10/12, B62D 25/06

(54) **Module de toit à élément vitré pour véhicule automobile, véhicule automobile et procédé de fabrication correspondants**
Dachmodul mit einem Fensterelement für ein Kraftfahrzeug, korrespondierendes Kraftfahrzeug und Verfahren zur Herstellung
Roof module with glazing element for a vehicle, the corresponding vehicle and fabrication process

(30) Priorité: 28.01.2005 FR 0500912
(43) Date de publication de la demande: 02.08.2006
(73) Titulaire: Advanced Comfort Systems France - ACS France, 79300 Bressuire (FR)
(72) Inventeur: Fourel, Pascal, 35400 Saint Malo (FR)
(74) Mandataire: Bioret, Ludovic

(56) Documents cités:
- EP-A- 0 201 384
- WO-A-2004/048154
- DE-A1- 19 648 330
- DE-B1- 2 634 717
- GB-A- 702 743
- GB-A- 2 037 354
- US-A- 4 292 774

## Description

Le domaine de l'invention est celui des véhicules automobiles, et en particulier des pavillons de véhicules automobiles. Plus précisément, l'invention concerne les modules de toit de véhicules automobiles équipés d'un ou plusieurs éléments vitrés, fixes ou mobiles.

On équipe déjà des pavillons de véhicules de surfaces vitrées. On propose notamment des modules de toit, destinés à être rapportés sur le châssis ou la structure du véhicule. Une ouverture est définie dans un panneau de pavillon, et est obturée par un ou plusieurs éléments vitrés.

Ces éléments vitrés sont équipés sur leur périphérie d'un joint, destiné à assurer la solidarisation avec le module de toit, et l'étanchéité. Le joint est chaussé sur le bord de l'élément vitré, et présente des moyens de solidarisation avec le module de toit.

Un exemple d'un tel joint est présenté dans le document DE 1279492.

Le montage d'un tel élément vitré est plutôt malaisé, en particulier pour des raisons de tolérance. Les dimensions d'un élément vitré ne sont pas toujours précises, et il faut en outre le placer précisément pour que l'espace entre le bord de l'élément vitré et celui de l'ouverture soit correctement couvert par le joint.

Ce positionnement précis est d'autant plus difficile que les joints équipant les bords de l'élément vitré sont souples, et ne permettent pas un taquage, c'est-à-dire un appui contre un point de référence, précis. Le joint empêche donc un ajustement précis et rapide.

Une autre difficulté de cette technique est qu'elle est peu adaptée à l'adaptation d'un élément vitré mobile.

Cette technique pose également des problèmes lorsque le bord de l'élément vitré présente un rayon relativement faible. En effet, dans ce cas, le joint a tendance à bailler, et donc à s'écarter de l'élément vitré, ce qui pose des problèmes esthétiques et d'étanchéité.

L'invention a notamment pour objectif de pallier ces différents inconvénients de l'état de l'art.

Plus précisément, un objectif de l'invention est de fournir une technique permettant de simplifier et d'optimiser l'assemblage et la solidarisation d'un élément vitré sur le panneau de toit.

L'invention a également pour objectif de fournir une telle technique permettant de mieux exploiter les tolérances, et en particulier de s'affranchir des problèmes liés aux tolérances importantes sur les éléments vitrés.

Un autre objectif de l'invention est de fournir une telle technique, permettant d'éviter que le joint ne baille, notamment lorsque les rayons sont faibles.

Encore un autre objectif de l'invention est de fournir une telle technique, qui soit simple à mettre à en oeuvre, et peu coûteuse.

Ces objectifs, ainsi que d'autres qui apparaîtront plus clairement par la suite, sont atteints à l'aide d'un module de toit pour véhicule automobile, comprenant au moins un élément vitré obturant une ouverture défmie dans un panneau de pavillon destiné à être rapporté sur ledit véhicule de façon à former au moins une partie de son pavillon.

Selon l'invention, au moins desdits éléments vitrés est solidarisé audit panneau de pavillon à l'aide d'un joint de colle suivant le bord dudit élément vitré, à une distance comprise entre 2 et 20 mm dudit bord de l'élément vitré, et le module de toit comprend un joint périphérique monté après collage entre ledit bord de l'élément vitré et le bord correspondant dudit panneau de pavillon, ledit joint présentant une surface sensiblement plane de finition et deux branches de solidarisation dont :
- une première branche dont l'extrémité est dirigée vers ledit joint de colle et vient en appui contre ledit élément vitré ;
- une seconde branche venant se loger dans un logement de blocage prévu à cet effet dans ledit panneau de pavillon.

Ainsi, le montage est simplifié, puisque le taquage peut s'effectuer sur un bord rigide, le bord du panneau vitré, et non sur un joint semi souple. En outre, le montage se fait en référence au panneau de toit, et non de l'élément vitré, se qui permet de garantir un affleurement optimal.

De plus, le montage des vitres est moins exigeant que pour les techniques de l'art antérieur en matière de positionnement des éléments vitrés, du fait du recouvrement du joint périphérique.

En d'autres termes, la technique de l'invention permet d'absorber les dispersions de positionnement des éléments vitrés, et leurs dispersions dimensionnelles.

Dans un mode de réalisation particulier de l'invention, ladite ouverture présente une forme générale en U, dont la partie intérieure et inférieure définit un rayon inférieur à 5 cm.

Dans cette situation, l'approche de l'invention permet d'éviter que le joint baille.

Selon l'invention, ledit panneau de pavillon présente au moins une nervure de guidage et de maintien dudit joint périphérique, s'étendant sensiblement perpendiculairement au plan dudit panneau de pavillon et coopérant avec l'espace défmi entre lesdites branches de solidarisation du joint périphérique.

Préférentiellement, ledit panneau de pavillon présente un décrochement au voisinage du bord de ladite ouverture, de façon que ladite surface de finition vienne en appui sur ledit décrochement et se trouve sensiblement dans la continuité de la partie apparente dudit panneau de pavillon.

L'ouverture peut être obturée par un élément vitré unique.

Selon une autre approche avantageuse, le module de toit comprend au moins deux éléments vitrés.

Dans ce cas, au moins un desdits éléments vitrés peut être mobile entre une position fermée et au moins une position ouverte. L'ensemble des éléments vitrés peuvent également être fixes.

De façon avantageuse, pour au moins un bord dudit élément vitré mobile (classiquement trois pour une élément rectangulaire), ledit joint de colle est remplacé par un joint d'étanchéité tubulaire, solidarisé audit panneau de pavillon.

Par ailleurs, préférentiellement, pour au moins un bord dudit élément vitré mobile, ledit joint de colle est supprimé, et ledit élément vitré mobile vient en contact avec ledit joint périphérique, en position fermée.

Selon un mode de réalisation avantageux de l'invention, ledit joint périphérique forme un ensemble surmoulé unique.

L'invention concerne également un véhicule automobile comprenant un module de toit tel que décrit ci-dessus.

L'invention concerne encore un procédé de fabrication d'un module de toit tel que revendiqué par la revendication 10.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 illustre un exemple de module de toit selon l'invention ;
- les figures 2A à 2C présentent trois modes de réalisation de l'obturation du module de la figure 1, respectivement avec 2, 3 et 4 éléments vitrés ;
- la figure 3 illustre le joint périphérique monté entre un élément vitré et le panneau de toit ;
- la figure 4 illustre le joint périphérique entre deux éléments vitrés ;
- les figures 5 et 6 présentent le joint périphérique pour un élément vitré mobile, respectivement pour un bord voisin du panneau de toit et pour un bord voisin d'un autre élément vitré ;
- la figure 7 est un organigramme simplifié du procédé de fabrication d'un module de toit selon l'invention.

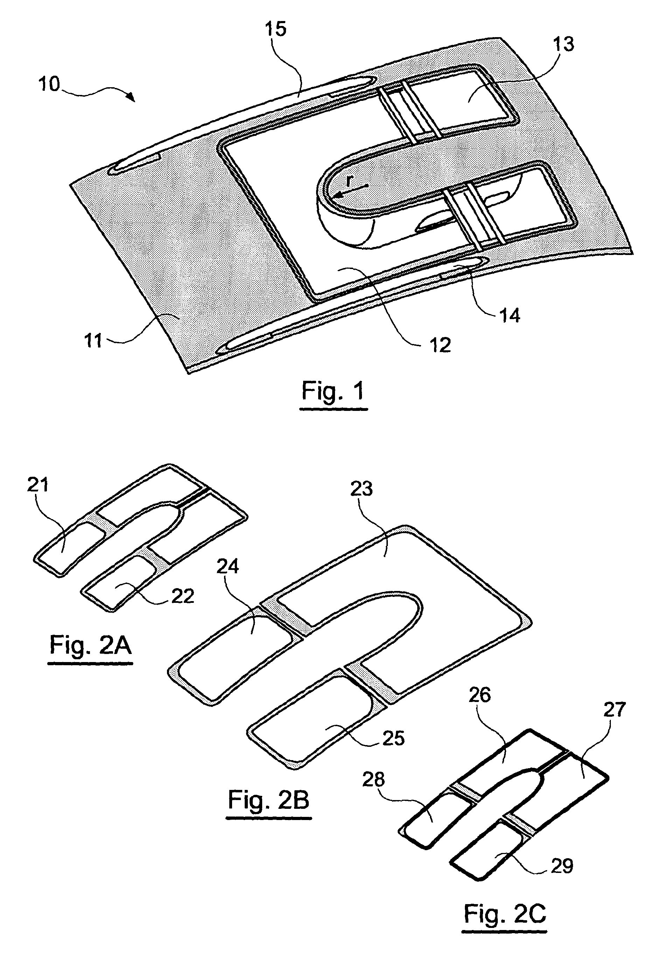

L'invention concerne donc un module de toit, dont un mode de réalisation est illustré en figure 1. Ce module de toit 10 est destiné à être solidarisé à la structure d'un véhicule.

Il comprend un panneau de pavillon 11, par exemple en métal ou en matière plastique. Des longerons 14 et 15 peuvent être montés sur ce panneau. Une ouverture 12 a été ménagée dans ce panneau 11, en vue de recevoir une surface vitrée 13.

Dans le mode de réalisation illustré, cette surface vitrée à une forme générale de U, qui présente des zones présentant des rayons faibles. C'est notamment le cas à l'intérieur du U, où le rayon r peut être inférieur à 5 cm. Dans cette zone, un joint classique a souvent tendance à bailler.

Sur la figure 1, la surface vitrée est réalisée en un seul élément. Dans d'autres modes de réalisation, illustrés respectivement par les figures 2A à 2C. Plus précisément :
- figure 2A : deux éléments vitrés 21, 22, symétriques et séparés au niveau de la base du U ;
- figure 2B : trois éléments vitrés 23, 24 et 25, dont un élément de base du U 23 et deux éléments rectangulaires 24 et 25 correspondant aux extrémités du U ;
- figure 2C : quatre éléments vitrés, deux éléments 26 et 27 symétrique formant la base du U, et deux éléments rectangulaires 28 et 29 correspondant aux extrémités du U.

Les vitres sont avantageusement en verre trempé, par exemple d'épaisseur compris entre 3 et 5 mm.

Selon différents modes de réalisation, les éléments vitrés rectangulaires 24, 25, 28 ou 29 peuvent être fixes ou mobiles. Un des avantages de l'invention est qu'elle permet sans difficulté de remplacer un élément fixe par un élément mobile, et inversement, sans modification du panneau de pavillon.

Il est bien sûr nécessaire de prévoir des joints, d'une part entre le bord du panneau de pavillon et le bord des éléments vitrés, et d'autre part entre les bords voisins de deux éléments vitrés.

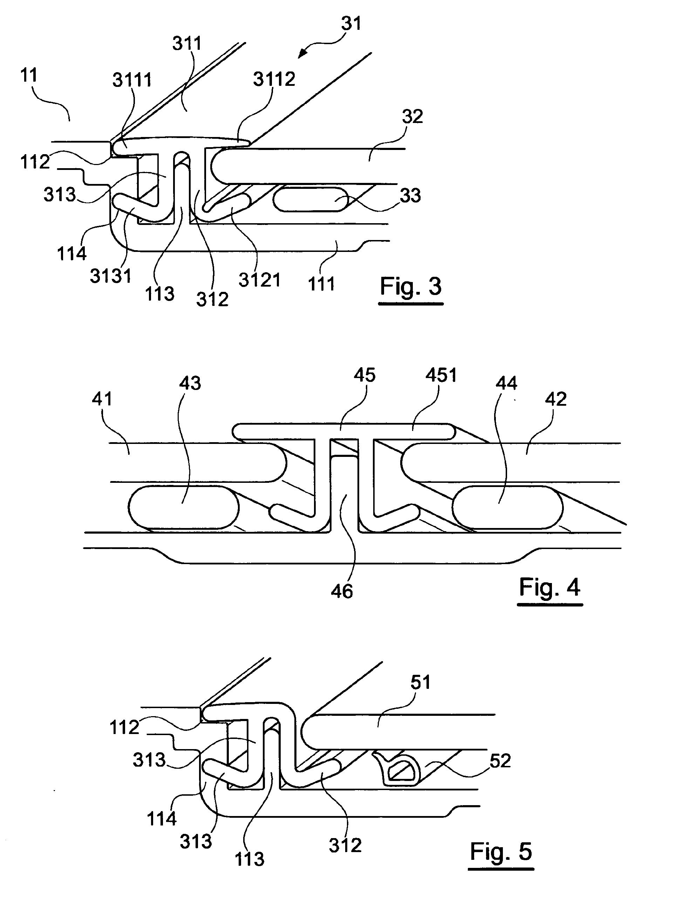

Selon l'invention, on utilise des joints chaussés, comme illustrés sur les figures 3 et 4.

Sur la figure 3, on note que le joint 31 présente une surface sensiblement plane de fmition 311, et deux branches de solidarisation 312 et 313 dont les bases sont parallèles, et perpendiculaires à la surface de finition 311. Ces branches présentent des extrémités recourbées 3121, 3131 s'étendant dans des directions sensiblement opposées.

Le panneau de pavillon 11 présente un décrochement principal 111 prévu pour recevoir le bord d'un élément vitré et le joint de colle correspondant. Ce décrochement 111 s'étend sensiblement parallèlement à la surface principale du panneau à une distance telle que l'élément vitré se trouve dans le même plan, lorsque l'assemblage est terminé.

Un autre décrochement intermédiaire 112 est prévu, de quelques dixièmes de millimètre, au bord de la surface principale du panneau. Il permet de recevoir une extrémité 3111 de la surface de finition 311, de façon que celle-ci se trouve dans l'alignement du panneau de pavillon, pour obtenir un aspect affleurant.

Le panneau de pavillon comprend encore, sur le décrochement principal 111, une nervure 113, prévue pour coopérer avec les branches de solidarisation du joint, et définissant un logement pour la branche 312, en coopération avec le bord de liaison 114.

L'assemblage est alors le suivant : l'élément vitré 32 est collé sur le décrochement 111, à l'aide d'un joint de colle 33, éloigné de quelques millimètres du bord de l'élément vitré, de façon à permettre ensuite la mise en place du joint périphérique 31.

Ce joint est donc ramené ensuite, après solidarisation de l'élément vitré sur le panneau de pavillon. Il s'agit d'un joint chaussé, que l'on insère à force, de façon que les deux branches de solidarisation 312 et 313 viennent chevaucher la nervure. La branche 312 vient alors chevaucher la périphérie de l'élément vitré, à l'aide d'une part de l'extrémité 3112 de la partie plane, et d'autre part du bord recourbé 3121. On obtient ainsi une bonne étanchéité.

On notera que l'épaisseur de l'extrémité 3112 se réduit progressivement pour que l'ensemble présente un aspect sensiblement affleurant.

L'autre branche de solidarisation 313 est immobilisée dans le logement défini par la nervure et le bord de liaison. L'extrémité recourbée 3131 vient forcer contre le bord de liaison 114, pour assurer un blocage de l'ensemble. Le cas échéant, une contre-dépouille peut être prévue pour une meilleure solidarisation, si nécessaire.

Sur la figure 4, on présente le joint périphérique adapté à une liaison entre deux éléments vitrés 41 et 42. Ces éléments ont, à nouveau, été préalablement collés sur le panneau de pavillon à l'aide de joints de colle 43, 44. De même que précédemment, ces joints de colle sont légèrement décalés par rapport au bord des éléments vitrés, pour permettre ensuite la mise en place du joint 45, qui vient chevaucher une nervure 46.

Le joint 45 est similaire à celui présenté en figure 3, si ce n'est qu'il est symétrique, puisqu'il agit de chaque côté sur un élément vitré 41, 42. Il diffère donc essentiellement du joint déjà décrit par sa surface de finition 451, qui peut être plane ou au contraire posséder deux extrémités diminuant progressivement, comme l'extrémité 3112 en figure 3.

Avantageusement, l'ensemble des joints se présente sous la forme d'un élément unique surmoulé, encore appelé araignée.

Comme déjà mentionné, un avantage de l'invention est qu'elle permet, de façon aisée, de remplacer des éléments vitrés fixes par des éléments vitrés mobiles, par exemple par coulissement.

Ainsi, la figure 5 présente le cas d'un élément vitré mobile 51, remplaçant l'élément vitré fixe 32 de la figure 3.

Aucune adaptation n'a été réalisée sur le panneau de pavillon 11. En revanche, le joint de colle 33 a été remplacé par un joint d'étanchéité 52, ici un joint d'étanchéité tubulaire, collé sur le décrochement. Ce joint peut également, bien sûr, être chaussé, clippé, etc.

Le joint périphérique a été légèrement modifié par rapport à la figure 3. Il présente toujours des branches de solidarisation 312, 313, qui viennent chevaucher la nervure 113, et une portion de finition prenant appui sur le décrochement intermédiaire 112.

En revanche, pour permettre la mobilité de l'élément vitré 51, la partie de finition 3112 venant recouvrir le bord de l'élément vitré a été supprimée.

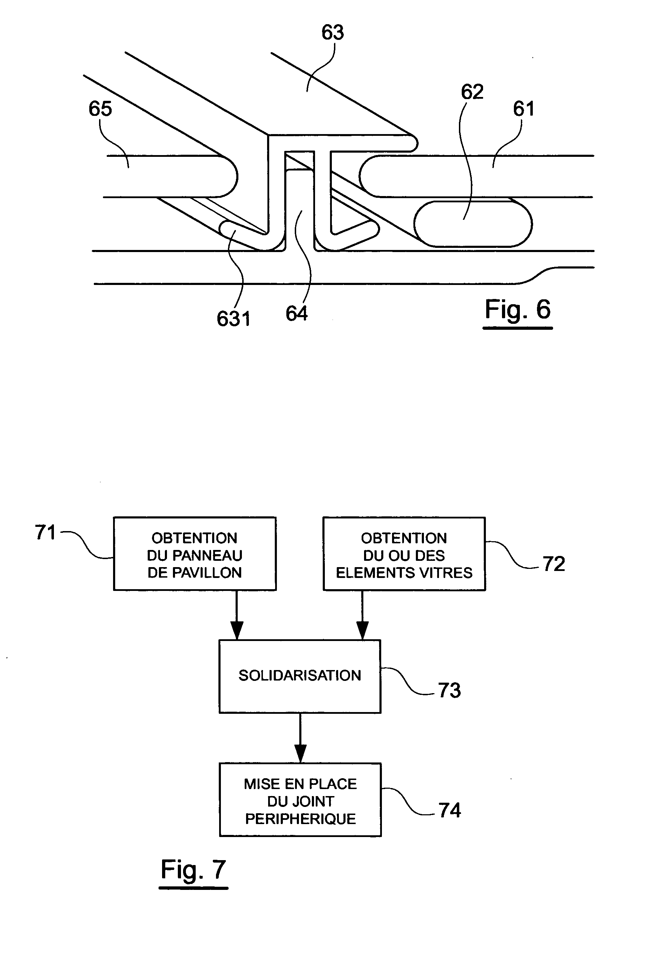

L'approche est la même pour une liaison entre deux éléments vitrés, l'un fixe et l'autre mobile, comme illustré en figure 6. L'élément vitré fixe 61 est solidarisé à l'aide d'un joint de colle 62, comme déjà expliqué.

Le joint périphérique 63 vient chevaucher la nervure 64. Du côté de l'élément fixe 61, il est identique à celui déjà décrit avec la figure 4. En revanche, du côté de l'élément mobile 65, il n'y a pas d'extrémité de finition venant le recouvrir, pour permettre la mobilité. L'élément mobile 65 vient en appui sur l'extrémité recourbée 631 du joint.

On note donc que, pour mettre en place un élément vitré mobile, seule la forme du joint périphérique doit être modifiée, ce qui facilite le montage et la mise en oeuvre.

La figure 7 résume le procédé de fabrication d'un module de toit selon l'invention, sous la forme d'un organigramme simplifié.

Dans un premier temps, on obtient ou on fabrique les éléments constitutifs principaux du module, à savoir le panneau de pavillon 71 et le ou les élément(s) vitré(s) 72.

On solidarise ensuite (73) les éléments vitrés fixes au panneau de pavillon. Ceux-ci sont solidarisés par collage, à l'aide d'un joint de collage positionné à quelques millimètres du bord de l'élément vitré, de façon à laisser la place suffisante pour le joint périphérique.

Une fois l'ensemble des éléments vitrés collés, on met en place le joint périphérique (74). La mise en place est guidée par les nervures prévues à cet effet sur le panneau de pavillon. Le joint périphérique se présente sous la forme d'un ensemble permettant une mise en place l'ensemble des bords de chacun des panneaux vitrés fixes.

L'approche est similaire quand un ou plusieurs éléments vitrés sont mobiles. Les éléments vitrés mobiles sont solidarisés au panneau de pavillon à l'aide de moyens connus permettant d'assurer et de contrôler leur mobilité de façon classique, par exemple par coulissement et/ou basculement.

Pour les bords d'éléments vitrés mobiles voisins d'un bord de l'ouverture, les joints de colle sont remplacés par un joint d'étanchéité, par exemple tubulaire. Les joints de colle entre deux éléments vitrés sont conçus de façon que l'élément mobile vienne prendre appui contre lui.

Cette approche permet de simplifier le montage, et notamment de réduire les problèmes liés aux tolérances.

Ainsi, en particulier, l'invention permet :
- un montage en référence sur le panneau de pavillon et non sur le bord des éléments vitrés, donc un positionnement répétable lié aux tolérances du panneau de pavillon et non à celles des éléments vitrés, garantissant un affleurement optimal du joint sur le panneau de pavillon ;
- un montage simplifié des éléments vitrés (le taquage s'effectue sur l'élément vitré au lieu de s'effectuer sur joint souple ou semi-souple) ;
- un montage des éléments vitrés moins exigeant en précision de positionnement (grâce au recouvrement du joint) ;
- un recouvrement permanent de la lèvre du joint sur le bord des éléments vitrés, absorbant les dispersions de positionnement de ceux-ci et leurs dispersions dimensionnelles ;
- un système de liaison du joint indépendant des éléments vitrés, pouvant être commun à une solution ouvrante et à une solution fixe.

## Revendications

1. Module de toit pour véhicule automobile, comprenant au moins un élément vitré (13, 32) obturant une ouverture (12) définie dans un panneau de pavillon (11) destiné à être rapporté sur ledit véhicule de façon à former au moins une partie de son pavillon,
**caractérisé en ce qu'**au moins un desdits éléments vitrés est solidarisé audit panneau de pavillon à l'aide d'un joint de colle (33) suivant le bord dudit élément vitré (13, 32), à une distance comprise entre 2 et 20 mm dudit bord de l'élément vitré,
et **en ce qu'**il comprend un joint périphérique (31) monté après collage entre ledit bord de l'élément vitré (13, 32) et le bord correspondant dudit panneau de pavillon (11), ledit joint (31) présentant une surface sensiblement plane de finition (311) et deux branches de solidarisation (312, 313) dont :
- une première branche (312) dont l'extrémité est dirigée vers ledit joint de colle (33) et vient en appui contre ledit élément vitré (13, 32) ;
- une seconde branche (313) venant se loger dans un logement de blocage prévu à cet effet dans ledit panneau de pavillon,
ledit panneau de pavillon (11) présentant au moins une nervure (113) de guidage et de maintien dudit joint périphérique (31), s'étendant sensiblement perpendiculairement au plan dudit panneau de pavillon (11) et coopérant avec l'espace défini entre lesdites branches de solidarisation (312, 313) du joint périphérique (31).

2. Module de toit pour véhicule selon la revendication 1, **caractérisé en ce que** ladite ouverture (12) présente une forme générale en U, dont la partie intérieure et inférieure définit un rayon inférieur à 5 cm.

3. Module de toit selon l'une des revendications 1 et 2, **caractérisé en ce que** ledit panneau de pavillon (11) présente un décrochement (111) au voisinage du bord de ladite ouverture (12), de façon que ladite surface de finition (311) vienne en appui sur ledit décrochement (111) et se trouve sensiblement dans la continuité de la partie apparente dudit panneau de pavillon (11).

4. Module de toit selon l'une quelconque des revendications 1 à 3, **caractérisé en ce qu'**il comprend au moins deux éléments vitrés (13, 32).

5. Module de toit selon la revendication 4, **caractérisé en ce qu'**au moins un desdits éléments vitrés est mobile entre une position fermée et au moins une position ouverte.

6. Module de toit selon la revendication 5, **caractérisé en ce que**, pour au moins un bord dudit élément vitré mobile (51), ledit joint de colle (33) est remplacé par un joint d'étanchéité tubulaire, solidarisé audit panneau de pavillon.

7. Module de toit selon l'une quelconque des revendications 5 et 6, **caractérisé en ce que**, pour au moins un bord dudit élément vitré mobile (51), ledit joint de colle (33) est supprimé, et ledit élément vitré mobile vient en contact avec ledit joint périphérique (31), en position fermée.

8. Module de toit selon l'une quelconque des revendications 1 à 7, **caractérisé en ce que** ledit joint périphérique (31) forme un ensemble surmoulé unique.

9. Véhicule automobile, **caractérisé en ce qu'**il comprend un module de toit comprenant au moins un élément vitré (13, 32) obturant une ouverture (12) définie dans un panneau de pavillon (11) destiné à être rapporté sur ledit véhicule de façon à former au moins une partie de son pavillon,
**caractérisé en ce qu'**au moins un desdits éléments vitrés (13, 32) est solidarisé audit panneau de pavillon (11) à l'aide d'un joint de colle (33) suivant le bord dudit élément vitré (13, 32), à une distance comprise entre 2 et 20 mm dudit bord de l'élément vitré (13, 32),
et **en ce qu'**il comprend un joint périphérique (31) monté après collage entre ledit bord de l'élément vitré (13, 32) et le bord correspondant dudit panneau de pavillon (11), ledit joint (31) présentant une surface sensiblement plane de finition (311) et deux branches de solidarisation (312, 313) dont :
- une première branche dont l'extrémité est dirigée vers ledit joint de colle (33) et vient en appui contre ledit élément vitré (13, 32) ;
- une seconde branche venant se loger dans un logement de blocage prévu à cet effet dans ledit panneau de pavillon,
ledit panneau de pavillon (11) présentant au moins une nervure (113) de guidage et de maintien dudit joint périphérique (31), s'étendant sensiblement perpendiculairement au plan dudit panneau de pavillon (11) et coopérant avec l'espace défini entre lesdites branches de solidarisation (312, 313) du joint périphérique (31).

10. Procédé de fabrication d'un module de toit pour véhicule automobile selon l'une quelconque des revendications 1 à 8, comprenant au moins un élément vitré (13, 32) obturant une ouverture (12) définie dans un panneau de pavillon (11) destiné à être rapporté sur ledit véhicule de façon à former au moins une partie de son pavillon,
**caractérisé en ce qu'**il comprend les étapes suivantes :
- obtention dudit panneau de pavillon et du ou desdits éléments vitrés ;
- solidarisation d'au moins un desdits éléments vitrés audit panneau de pavillon à l'aide d'un joint de colle (33) suivant le bord dudit élément vitré, à une distance comprise entre 2 et 20 mm dudit bord de l'élément vitré ;
- mise en place d'un joint périphérique (31), après collage, entre ledit bord de l'élément vitré et le bord correspondant dudit panneau de pavillon, ledit joint présentant une surface sensiblement plane de finition et deux branches de solidarisation dont :
- une première branche (312) dont l'extrémité est dirigée vers ledit joint de colle et vient en appui contre ledit élément vitré ;
- une seconde branche (313) venant se loger dans un logement de blocage prévu à cet effet dans ledit panneau de pavillon.
- le joint périphérique est mise en place de façon qu'une nervure (113) de guidage et de maintien dudit joint périphérique (31), prévue sur ledit panneau de pavillon et s'étendant sensiblement perpendiculairement au plan dudit panneau de pavillon, coopère avec l'espace défini entre lesdites branches de solidarisation du joint périphérique.

## Claims

1. Roof module for a motor vehicle, comprising at least one glazed element (13, 32) occluding an opening (12) defined within a roof panel (11) intended to be added onto the said vehicle in such a way as to form at least part of its roof,
**characterised in that** at least one of the said glazed elements is fastened to the said roof panel with the aid of an adhesive joint (33) that follows the edge of the said glazed element (13, 32) at a distance of between 2 and 20 mm from the said edge of the glazed element;
and **in that** it comprises a peripheral joint (31) which is mounted, after sticking, between the said edge of the glazed element (13, 32) and the corresponding edge of the said roof panel (11), the said joint (31) having a substantially flat finishing surface (311) and two fastening legs (312, 313) including:
- a first leg (312) whose end is directed towards the said adhesive joint (33) and rests against the said glazed element (13, 32);
- a second leg (313) which lodges in a locking housing provided for that purpose in the said roof panel;
the said roof panel (11) having at least one rib (113) for guiding and holding the said peripheral joint (31), which rib extends substantially perpendicularly to the plane of the said roof panel (11) and cooperates with the space defined between the said fastening legs (312, 313) of the peripheral joint (31).

2. Roof module for a vehicle according to claim 1,
**characterised in that** the said opening (12) has the general shape of a U, the internal and lower part of which defines a radius of less than 5 cm.

3. Roof module according to either of claims 1 or 2,
**characterised in that** the said roof panel (11) has a recess (111) in the vicinity of the edge of the said opening (12), in such a way that the said finishing surface (311) rests on the said recess (111) and is located substantially in the continuation of the visible part of the said roof panel (11).

4. Roof module according to any of claims 1 to 3,
**characterised in that** it comprises at least two glazed elements (13, 32).

5. Roof module according to claim 4, **characterised in that** at least one of the said glazed elements can be moved between a closed position and at least one open position.

6. Roof module according to claim 5, **characterised in that**, in the case of at least one edge of the said movable glazed element (51), the said adhesive joint (33) is replaced by a tubular seal which is fastened to the said roof panel.

7. Roof module according to either of claims 5 or 6,
**characterised in that**, in the case of at least one edge of the said movable glazed element (51), the said adhesive joint (33) is omitted, and the said movable glazed element (51) comes into contact with the said peripheral joint (31), in the closed position.

8. Roof module according to any of claims 1 to 7,
**characterised in that** the said peripheral joint (31) forms a single over-moulded unit.

9. Motor vehicle, **characterised in that** it comprises a roof module comprising at least one glazed element (13, 32) occluding an opening (12) defined within a roof panel (11) intended to be added onto the said vehicle in such a way as to form at least part of its roof,
**characterised in that** at least one of the said glazed elements (13, 32) is fastened to the said roof panel (11) with the aid of an adhesive joint (33) that follows the edge of the said glazed element (13, 32) at a distance of between 2 and 20 mm from the said edge of the glazed element (13, 32);
and **in that** it comprises a peripheral joint (31) which is mounted, after sticking, between the said edge of the glazed element (13, 32) and the corresponding edge of the said roof panel (11), the said joint (31) having a substantially flat finishing surface (311) and two fastening legs (312, 313) including:
- a first leg whose end is directed towards the said adhesive joint (33) and rests against the said glazed element (13, 32);
- a second leg which lodges in a locking housing
provided for that purpose in the said roof panel; the said roof panel (11) having at least one rib (113) for guiding and holding the said peripheral joint (31), which rib extends substantially perpendicularly to the plane of the said roof panel (11) and cooperates with the space defined between the said fastening legs (312, 313) of the peripheral joint (31).

10. Method of manufacturing a roof module for a motor vehicle according to any of claims 1 to 8, comprising at least one glazed element (13, 32) occluding an opening (12) defined within a roof panel (11) intended to be added onto the said vehicle in such a way as to form at least part of its roof,
**characterised in that** said method comprises the following stages:
- the obtaining of the said roof panel and of the said glazed element or elements;
- the fastening of at least one of the said glazed elements to the said roof panel with the aid of an adhesive joint (33) that follows the edge of the said glazed element at a distance of between 2 and 20 mm from the said edge of the glazed element;
- the placing in position of a peripheral joint (31), after sticking, between the said edge of the glazed element and the corresponding edge of the said roof panel, the said joint having a substantially flat finishing surface and two fastening legs including:
- a first leg (312) whose end is directed towards the said adhesive joint and rests against the said glazed element;
- a second leg (313) which lodges in a locking housing provided for that purpose in the said roof panel;
- the peripheral joint is placed in position in such a way that a rib (113) for guiding and holding the said peripheral joint (31), which rib is provided on the said roof panel and extends substantially perpendicularly to the plane of the said roof panel, cooperates with the space defined between the said fastening legs of the peripheral joint.

## Patentansprüche

1. Dachmodul für ein Kraftfahrzeug, das mindestens ein verglastes Element (13, 32) aufweist, welches eine in einem Dachpaneel (11) angebrachte Öffnung (12) verschließt, wobei dieses Dachpaneel so auf dem besagten Fahrzeug anzubringen ist, dass es mindestens einen Teil des Fahrzeugdachs bildet,
**dadurch gekennzeichnet, dass** mindestens eines der besagten verglasten Elemente mit dem Dachpaneel mit Hilfe eines Kleberstrangs (33) verbunden ist, das dem Rand des besagten verglasten Elementes (13, 32) in einer Entfernung von 2 bis 20 mm des Randes des verglasten Elementes folgt, und
dass es eine umlaufende Dichtung (31) aufweist, die nach Verklebung zwischen dem besagten Rand des verglasten Elementes (13, 32) und dem entsprechenden Rand des besagten Dachpaneels (11) montiert wird, wobei die besagte Dichtung (31) eine in etwa ebene Abschlussfläche (311) und zwei Verbindungszweige (312, 313) aufweist, von denen:
- ein erster Zweig (312) derart gestaltet ist, dass dessen Ende in Richtung des besagten Kleberstrangs (33) verläuft und sich auf das besagte verglaste Element (13, 32) abstützt;
- ein zweiter Zweig (313) in einer dafür im besagten Dachpaneel vorgesehenen Blockiereinlassung eingelegt wird,
wobei das besagte Dachpaneel (11) mindestens eine Führungs- und Halterippe (113) der besagten umlaufenden Dichtung (31) aufweist, die sich in etwa senkrecht zur Ebene des besagten Dachpaneels (11) erstreckt und mit dem zwischen den besagten Verbindungszweigen (312, 313) der umlaufenden Dichtung (31) begrenzten Raum zusammenwirkt.

2. Dachmodul für ein Kraftfahrzeug nach Anspruch 1, **dadurch gekennzeichnet, dass** die besagte Öffnung (12) im Allgemeinen U-förmig gestaltet ist, deren innerer und unterer Teil einen Radius von weniger als 5 cm bildet.

3. Dachmodul nach einem der Ansprüche 1 und 2, **dadurch gekennzeichnet, dass** das besagte Dachpaneel (11) einen Rücksprung (111) in der Nähe des Randes der besagten Öffnung (12) aufweist, so dass die besagte Abschlussfläche (311) sich auf dem besagten Rücksprung (111) abstützt und in etwa in der Verlängerung des sichtbaren Teils des besagten Dachpaneels (11) liegt.

4. Dachmodul nach einem der Ansprüche 1 bis 3, **dadurch gekennzeichnet, dass** es mindestens zwei verglaste Elemente (13, 32) aufweist.

5. Dachmodul nach Anspruch 4, **dadurch gekennzeichnet, dass** mindestens eines der besagten verglasten Elemente zwischen einer geschlossenen und mindestens einer offenen Position beweglich ist bzw. sind.

6. Dachmodul nach Anspruch 5, **dadurch gekennzeichnet, dass** für mindestens einen Rand des besagten beweglichen verglasten Elementes (51), der besagte Kleberstrang (33) durch eine mit dem besagten Dachpaneel verbundene rohrförmige Dichtung ersetzt wird.

7. Dachmodul nach einem der Ansprüche 5 und 6, **dadurch gekennzeichnet, dass** für mindestens einen Rand des besagten beweglichen verglasten Elementes (51), der besagte Kleberstrang (33) weggelassen wird, wobei das besagte bewegliche verglaste Element in der geschlossenen Position die besagte umlaufende Dichtung (31) berührt.

8. Dachmodul nach einem der Ansprüche 1 bis 7, **dadurch gekennzeichnet, dass** die besagte umlaufende Dichtung (31) eine einzige geformte Einheit bildet.

9. Kraftfahrzeug, **dadurch gekennzeichnet, dass** es ein Dachmodul aufweist, das mindestens ein verglastes Element (13, 32) aufweist, welches eine in einem Dachpaneel (11) angebrachte Öffnung (12) verschließt, wobei dieses Dachpaneel so auf dem Fahrzeug anzubringen ist, dass es mindestens einen Teil des Fahrzeugdachs bildet,
**dadurch gekennzeichnet, dass** mindestens eines der besagten verglasten Elemente (13, 32) mit dem Dachpaneel (11) mit Hilfe eines Kleberstrangs (33) verbunden ist, welcher dem Rand des besagten verglasten Elementes (13, 32) in einer Entfernung von 2 bis 20 mm des besagten Randes des verglasten Elementes (13, 32) folgt, und
dass es eine umlaufende Dichtung (31) aufweist, die nach Verklebung zwischen dem besagten Rand des verglasten Elementes (13, 32) und dem entsprechenden Rand des besagten Dachpaneels (11) montiert wird, wobei die besagte Dichtung (31) eine in etwa ebene Abschlussfläche (311) und zwei Verbindungszweige (312, 313) aufweist, von denen:
- ein erster Zweig derart gestaltet ist, dass dessen Ende in Richtung des besagten Kleberstrangs (33) verläuft und sich auf das besagte verglaste Element (13, 32) abstützt;
- ein zweiter Zweig in einer dafür im besagten Dachpaneel vorgesehenen Blockiereinlassung eingelegt wird,
wobei das besagte Dachpaneel (11) mindestens eine Führungs- und Halterippe (113) der besagten umlaufenden Dichtung (31) aufweist, die sich in etwa senkrecht zur Ebene des besagten Dachpaneels (11) erstreckt und mit dem zwischen den besagten Verbindungszweigen (312, 313) der umlaufenden Dichtung (31) begrenzten Raum zusammenwirkt.

10. Herstellungsverfahren eines Dachmoduls für Kraftfahrzeuge nach einem der Ansprüche 1 bis 8, das mindestens ein verglastes Element (13, 32) aufweist, welches eine in einem Dachpaneel (11) angebrachte Öffnung (12) verschließt, wobei dieses Dachpaneel so auf dem besagten Fahrzeug anzubringen ist, dass es mindestens einen Teil des Fahrzeugdachs bildet,
**dadurch gekennzeichnet, dass** es die folgenden Schritte umfasst:
- Erhalten des besagten Dachpaneels und des verglasten Elementes bzw. der besagten verglasten Elemente;
- Verbinden von mindestens einem der besagten verglasten Elemente mit dem besagten Dachpaneel mit Hilfe eines Kleberstrangs (33), der dem Rand des besagten verglasten Elementes in einer Entfernung von 2 bis 20 mm des besagten Randes des verglasten Elementes folgt;
- Anbringen einer umlaufenden Dichtung (31) nach dem Verkleben zwischen dem besagten Rand des verglasten Elementes und dem entsprechenden Rand des besagten Dachpaneels, wobei die besagte Dichtung eine in etwa ebene Abschlussfläche und zwei Verbindungszweige aufweist, von denen
- ein erster Zweig (312) derart gestaltet ist, dass dessen Ende in Richtung des besagten Kleberstrangs (33) verläuft und sich auf das besagte verglaste Element (13, 32) abstützt;
- ein zweiter Zweig (313) in einer dafür im besagten Dachpaneel vorgesehenen Blockiereinlassung eingelegt wird,
- wobei die umlaufende Dichtung so angebracht wird, dass eine auf dem besagten Dachpaneel vorgesehene Führungs- und Halterippe (113) der besagten umlaufenden Dichtung (31), die sich in etwa senkrecht zur Ebene des besagten Dachpaneels erstreckt, mit dem zwischen den besagten Verbindungszweigen der umlaufenden Dichtung begrenzten Raum zusammenwirkt.
